Europäisches Patentamt

European Patent Office

Office européen des brevets

(19)

(11) Veröffentlichungsnummer : **0 185 790
B1**

(12) EUROPÄISCHE PATENTSCHRIFT

(45) Veröffentlichungstag der Patentschrift :
15.03.89

(51) Int. Cl.⁴ : **G 01 M 17/00**

(21) Anmeldenummer : 84116280.3

(22) Anmeldetag : 24.12.84

(54) Verfahren zum Übertragen von Kräften und/oder Momenten sowie Vorrichtung hierzu.

(43) Veröffentlichungstag der Anmeldung :
02.07.86 Patentblatt 86/27

(45) Bekanntmachung des Hinweises auf die Patenterteilung : 15.03.89 Patentblatt 89/11

(84) Benannte Vertragsstaaten :
AT DE FR GB IT

(56) Entgegenhaltungen :
DE--A-- 2 551 067
DE--A-- 3 114 714

(73) Patentinhaber : CARL SCHENCK AG
Landwehrstrasse 55 Postfach 40 18
D-6100 Darmstadt (DE)

(72) Erfinder : Treitz, Peter-Ludwig
Korellweg 6
D-6100 Darmstadt (DE)

(74) Vertreter : Dallhammer, Herbert, Dipl.-Ing.
CARL SCHENCK AG Patentabteilung Postfach 4018
Landwehrstrasse 55
D-6100 Darmstadt (DE)

## Beschreibung

Die Erfindung betrifft ein Verfahren zur Übertragung von Kräften und/oder Momenten zwischen einem antreibbaren Prüfstand und einem Prüfling sowie eine entsprechende Vorrichtung.

Prüfstände zur Untersuchung von Fahrzeugen oder deren Bauteilen werden je nach ihrem Verwendungszweck als Leistungsprüfstand, Bremsprüfstand, Getriebeprüfstand oder Motorenprüfstand bezeichnet. Eigen ist diesen gesamten Prüfständen, daß das zu untersuchende Bauteil mit Antriebs- und Bremsmitteln verbunden wird, beispielsweise mit einem Gleichstrommotor, der sowohl als Generator als auch als Antriebsmotor zu betreiben ist. Im Falle des Generatorbetriebs wirkt dieser Antrieb als Bremse für von dem Bauteil oder dem Kraftfahrzeug durch seinen eigenen Motor ausgehende Kräfte und Momente. Im Falle des Betreibens durch eine Gleichstrommaschine als Motor werden Kräfte und Momente auf den Fahrzeugeigenantrieb von außen her übertragen.

Zur Übertragung dieser Wirkungen ist zwischen der Antriebs-Bremsmaschine des Prüfstandes und dem Kraftfahrzeug bzw. dem Bauteil eine Verbindung zu schaffen, um aus den jeweiligen Kräften und Momenten Rückschlüsse auf das zu untersuchende Bauteil ziehen zu können.

Die bisher verwendeten Verbindungsmittel sind ein oder mehrere Rollen, auf denen beispielsweise das Kraftfahrzeug aufsteht und wobei die Rollen beispielsweise über die Räder des Kraftfahrzeugs angetrieben werden und ihrerseits eine als Generator schaltbare Gleichstrommaschine antreiben.

Nachteilig ist bei einer derartigen Verbindung, die über Reibschluß geschieht, daß entsprechend der zu übertragenden Leistung der bzw. die Rollendurchmesser auf denen sich die Antriebsräder des Kraftfahrzeuges abstützen bei steigender Leistung, Geschwindigkeit und Zeitdauer größere Rollendurchmesser erfordern.

Bei sogenannten Getriebeprüfständen, bei denen beispielsweise die auf eine Fahrbahn übertragene Leistung des Kraftfahrzeugmotors einschließlich Getriebe, Gelenkwelle und Hinterachse gemessen werden sollen, wird dieser Antriebsstrang über die Antriebsachse an den Radwellen anstelle der Räder mit Gelenkwellen, die ihrerseits mit Antriebs- und Bremsmitteln beispielsweise eine Gleichstrommaschine verbunden sind mit den Gleichstrommaschinen verbunden. Anstelle elektrischer Maschinen als Antriebs- und Bremsmittel können jedoch in gleicher Weise auch hydraulische Maschinen oder Wirbelstrombremsen als Antriebs- und Bremsmittel verwendet werden.

Bei derartigen Getriebeprüfständen fehlt jedoch das Übertragungsverhalten, wie es bei Rollenprüfständen gegeben ist. Deshalb müssen zusätzliche teilweise empirisch festgelegte Zusatzfaktoren in einer Regelanlage, in der beispielsweise die Fahrzeugwiderstände wie Roll- und/oder Luftwiderstand simuliert werden, berücksichtigt werden, um eine sichere Übertragung der auf dem Prüfstand gemessenen Werte auf den tatsächlichen Betriebszustand eines Kraftfahrzeuges, welches über eine Fahrbahn fährt zu gewährleisten.

Durch die deutsche Offenlegungsschrift Nr. 3114714 ist eine Einrichtung zur betriebsähnlichen Prüfung von Fahrzeugrädern bekannt geworden, wobei die senkrechten Kräfte und Seitenkräfte mit Hilfe von Prüfzylindern über eine Belastungseinrichtung eingeleitet werden, auf der das Fahrzeugrad praxisähnlich befestigt ist, die sich dadurch auszeichnet, daß das Fahrzeugrad über den aufgezogenen Reifen in einer drehbaren Radeinspannung nahezu fest eingespannt ist. Eine derartige Einrichtung dient zur Untersuchung des dynamischen Verhaltens eines Kraftfahrzeugrades.

Ausgehend hiervon liegt der Erfindung die Aufgabe zugrunde ein Meßverfahren und eine entsprechende Vorrichtung in Vorschlag zu bringen, wobei die Meßwerte gleich den Betriebswerten des auf einer Fahrbahn rollenden Fahrzeuges sind ohne daß empirische Zusatzfaktoren berücksichtigt werden müssen. Die Lösung dieser Aufgabe ist in den Ansprüchen 1, 2 dargestellt. Durch die Aufhängung des antreibbaren Prüflings an der Prüfmaschine mit der gleichzeitigen drehelastischen Verbindung und einer Fixierung des Prüflings gegenüber dem Prüfstand wird der selbe Zustand bereits auf dem Prüfstand erreicht wie er beim späteren Betrieb des Kraftfahrzeugs auf der Straße auftritt. Eine Getriebelose wie sie bisher bei Verwendung von Gelenkwellen bei Getriebeprüfständen auftritt wird vermieden. Auch wirkt bei dem erfinderischen Verfahren die gesamte auf dem Prüfstand durch Schwungmassen oder Schwungmassensimulation nachgebildete Kraftfahrzeugmasse unverfälscht auf die drehbar gefassten Räder wie es im Betriebszustand des Kraftfahrzeuges ebenfalls auftritt.

Auch wird durch das erfinderische Verfahren die von einem Antriebsmotor im Kraftfahrzeug über den gesamten Getriebestrang und über die Kraftfahrzeugräder auf die Fahrbahn übertragene Leistung bereits reproduzierbar auf die Prüfstandsmaschine übertragen wenn diese als Bremse für den zu untersuchenden Antriebsstrang dient. Weiterhin ist es möglich, von der Prüfstandsmaschine her entsprechend den Fahrbahnbedingungen bei Steigung der Fahrbahn oder bei Gefälle dem Kraftfahrzeugmotor und seinem Antriebsstrang zusätzlich belastende Kräfte und Momente über mindestens ein Kraftfahrzeugrad einzuspeisen. Genauso lassen sich die während des Betriebs auftretenden Gegebenheiten wie Kurvenfahrt, Bergfahrt, Talfahrt ; Belastungen durch die Fahrbahnoberfläche, die alle zu einer zusätzlichen Belastung des Antriebsstranges führen und zu elastischen Verformungen dieses Stranges führen können beispielsweise Biegung der Hinterachse, Torsion der Gelenkwelle, auf dem nach dem erfindungsgemäßen Verfahren betriebenen Kraftfahrzeugprüfstand simulieren.

Anspruch 2 stellt eine Vorrichtung zur Durchführung des Verfahrens unter Schutz bei der gewährleistet ist, daß keine Getriebelose auftritt. Bei den bisherigen Kraftfahrzeugprüfständen, insbesondere Prüfständen für den Antriebsstrang trat durch Verbindung der Antriebsachse mittels Gelenkwelle mit den Antriebs-/Bremsmitteln der Prüfstandsmaschinen so lang eine nicht meßbare Bewegung auf, bis die Antriebsmittel in einer Richtung aneinander anlagen ; das Ende der Getriebelose ergab stoßartige Druckbelastungen, die Schädlich für die Prüfstandsmaschine und für den zu untersuchenden Antriebsstrang sind insbesondere bei wechselnden Lastzuständen. Durch die direkte koaxiale Ausrichtung und die Verwendung eines aufblasbaren Elements wird eine drehelastische Übertragung zwischen Prüfstandsmaschine und zu untersuchendem Kraftfahrzeug oder Antriebsstrang erreicht, die gleichzeitig der Betriebsbelastung diese Bauteile beim späteren Betrieb ist. Auch kann kein Fehler durch Versatz auftreten ; ebenso müssen keine zusätzlichen Parameter mit in die Messung aufgenommen werden um die Lage der Aufstandslinie des rollenden Reifens auf der Laufrolle eines Prüfstands zu berücksichtigen.

Zur vollen Simulation des Betriebsverhaltens des zu untersuchenden Kraftfahrzeugs oder Antriebsstranges werden gemäß Anspruch 4 alle Räder des Antriebsstranges in koaxial ausgerichteten Kupplungen aufgenommen und mittels aufblasbarer Reifen dort fixiert.

Gemäß Ausgestaltung der erfinderischen Vorrichtung nach Anspruch 3 wird anstelle eines aufblasbaren Elements der Autoreifen selbst benutzt, um auch hiermit die tatsächlichen Betriebszustände beim Fahren des Kraftfahrzeugs zu simulieren.

Mit den Ansprüchen 5 und 6 werden besondere Ausgestaltungen des koaxialen Bauteils unter Schutz gestellt und Anspruch 7 stellt eine Durchmesserveränderung des koaxialen Kupplungsteils unter Schutz, mit dem zum einen Betriebsverhältnisse bei verschiedenem Reifendruck simuliert werden können und welches auch eingesetzt werden kann um verschiedene Fahrzeuge mit verschiedenen Raddurchmessern auf dem selben Prüfstand untersuchen zu können.

In weiterer Ausgestaltung des Erfindungsgegenstandes wird im Anspruch 8 eine Platte unter Schutz gestellt, auf der die Antriebs- und Bremsmittel der Prüfmaschinen in Richtung auf die Achsen des zu untersuchenden Kraftfahrzeugs verschiebbar sind und auch je Seite aufeinander zubewegbar sind. Damit können verschiedene Kraftfahrzeuge oder Antriebsstränge für verschiedene Fahrzeuge auf ein und demselben Prüfstand untersucht werden, ohne daß zusätzliche Gelenkwellen benutzt werden müssen, die wie oben ausgeführt, zu zusätzlichen Getriebelosen führen würden.

Durch Anheben der Grundplatte, wie in Anspruch 9 unter Schutz gestellt, wird das Verhalten eines Antriebsstranges des Kraftfahrzeugs bei Berg- und Talfahrt sehr wohl simulierbar und es lassen sich durch Neigen des Fahrzeugs auf der Grundplatte einschließlich Antriebs- und Bremsmaschinen Prüfstände quer zur Längsrichtung erfindungsgemäß Belastungen durch Schräglagen simulieren. Anstelle Bewegung der gesamten Platte wird in Ausgestaltungen der Erfindung vorgeschlagen, durch zusätzliche Belastungseinrichtungen, die am Kupplungsteil angreifen, die Belastung von Hinterachsen und die Torsion von Gelenkwellen bei Kurvenfahrt, Zugbetrieb bei Bergauf-Fahrt, Schubbetrieb bei Bergab -Fahrt, nachzubilden. Eine zusätzliche Nachbildung des Einflusses der Masse des zu untersuchenden Kraftfahrzeugs im statischen Zustand ist durch die erfindungsgemäße Aufhängung nicht mehr erforderlich.

Durch die drehbare Aufnahme mindestens eines Antriebsrades werden gemäß der Erfindung erstmals alle Wechselwirkungen zwischen Fahrbahn und Antriebsmaschine des Kraftfahrzeugs an der Stelle ihres Auftretens ohne Verfälschung in den Prüfstand eingeleitet oder von diesem in die Antriebsmaschine des Kraftfahrzeugs eingeleitet, was bisher mit derartigen Prüfständen nicht möglich war.

In der nachfolgenden Zeichnung wird die Erfindung näher erläutert.

Es zeigen :

Figur 1 zur Erläuterung des Verfahrens ein erfindungsgemäß in einem Prüfstand aufgenommenes Kraftfahrzeug an seinen Antriebsrädern bzw. an der Kraftfahrzeugachse

Figur 2 eine Ausgestaltung eines Kupplungselements zwischen Antriebsrad und Prüfstandsmaschine im Schnitt und in Ansicht

Figur 3 eine Anordnung von Prüfstandsantriebsmaschinen einschließlich Kupplungselementen für ein Fahrzeug auf einer gegen die Horizontale neigbaren Platte.

In den Figuren werden entsprechende Bauteile mit den selben Bezugsziffern bezeichnet.

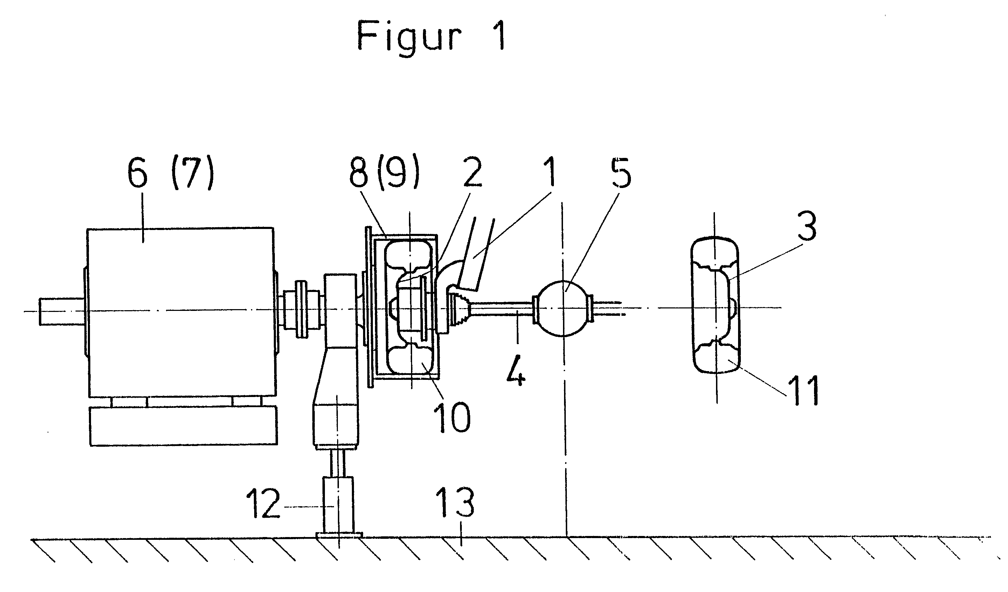

In Figur 1 wird ein Kraftfahrzeug 1 an seinen Antriebsrädern 2, 3, die über die Hinterachse 4 und über das Ausgleichsgetriebe 5 über eine nicht dargestellte Gelenkwelle und ein Mehrganggetriebe mit einem ebenfalls nicht dargestellten Motor verbunden sind von fest mit den Antriebsmaschinen des Prüfstandes 6, 7 verbundenen Kupplungen 8, 9 umfaßt.

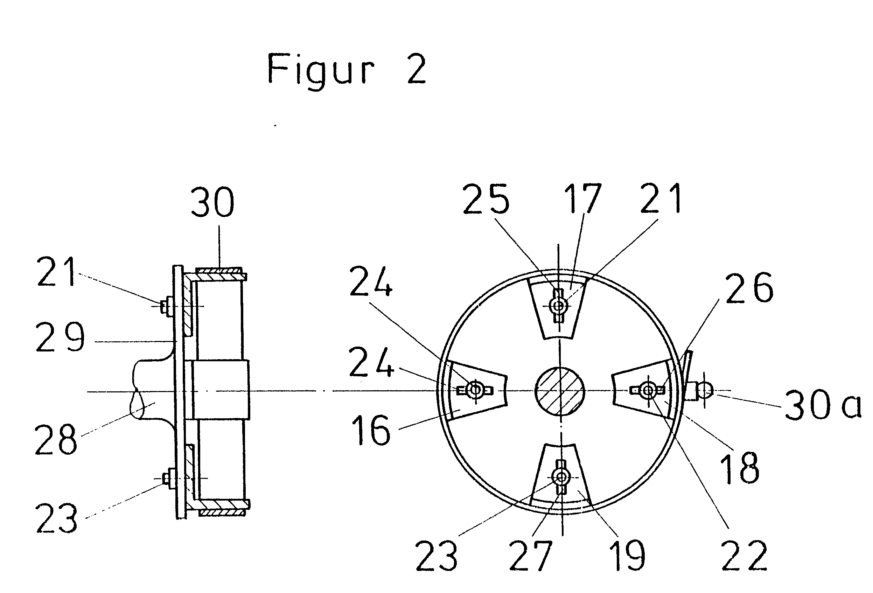

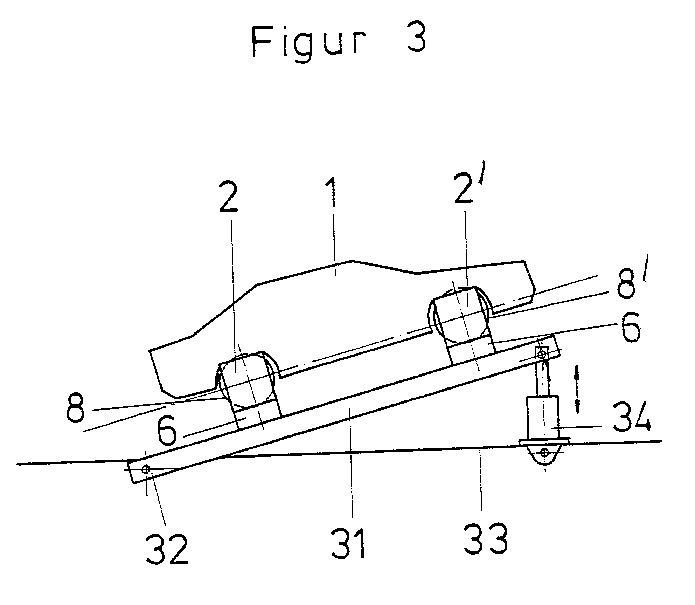

Im Ausführungsbeispiel nach Figur 1 sind die Kupplungen 8, 9 im Gegensatz zu den in Figur 2 und 3 dargestellten Ausführungsformen radial nicht verstellbar jedoch besitzen sie entsprechend Verwendungszweck verschiedene Durchmesser. In diesem Falle wird durch Aufpumpen der Antriebsräder 2, 3 durch Dehnung des jeweiligen Reifens 10, 11 eine Reibverbindung zwischen der Innenseite der Kupplungen 8, 9 und der Reifenoberfläche geschaffen.

Damit ist das Kraftfahrzeug 1 wie auch während des Betriebes über seine Reifen 10, 11 und die Kupplungen 8, 9 die mit den Antriebsmaschinen 6, 7 verbunden sind drehbar mit diesen vereinigt.

Durch eine derartige Aufnahme über die Antriebsräder 2, 3 mit Hilfe der Reifen 10 und 11 und der fest mit den Antriebsmaschinen verbundenen Kupplungen 8, 9 lassen sich nunmehr nach einem vorgebbarem Programm auftretende Betriebsverhältnisse z. B. Beschleunigungen, Verzögerungen, Berg-Talfahrt, Kurvenfahrt, zusätzliche Beeinflussung des gesamten Antriebsstranges, der aus dem Kraftfahrzeugmotor, Kraftfahrzeuggetriebe, Kraftfahrzeuggelenkwelle, dem Ausgleichsgetriebe selbst, den Hinterachsen und den Antriebsrädern besteht durch den Antriebsmotor des Kraftfahrzeugs in die als Generatoren wirkenden Antriebsmaschinen 6, 7 des Prüfstandes oder vice versa einleiten.

Wird nun mit der Kupplung 8 ein zusätzlicher Geber 12 verbunden, der sich auf einer Unterlage 13 abstützt, können auch zusätzliche von der Fahrbahn ausgehende Kräfte, die zu Stößen im Getriebestrang führen auf ihre Wirkung hin untersucht werden.

In Figur 2 ist eine radial bewegliche Kupplung 15 im Schnitt und in Ansicht dargestellt. Vier Backen 16, 17, 18, 19 sind mittels Bolzen 20, 21, 22, 23, die in Langlöchern 24, 25, 26, 27 geführt sind zu einer fest mit der Welle 28 der Antriebsmaschine 6 bzw. 7 verbundenen Lagerplatte 29 radial beweglich angeordnet. Ein Anpressband 30 umschließt die Backen 16, 17, 18, 19. Das Anpressband 30 kann über eine Stelleinrichtung 30 a verkürzt oder verlängert werden, so daß entsprechend eines zu verbindenden Antriebsrades 2, 3 über seine Reifen 10, 11 eine wählbare Verbindung mit den Antriebsmaschinen 6 bzw. 7 geschaffen werden kann auch wenn die Reifen 10 bzw. 11 einen entsprechend der Vorgabe verschiedenen vom Normaldruck abweichenden Innendruck aufweisen. Damit lassen sich auch Einflüsse auf das Fahrzeugverhalten bei vom vorgegebenen Druck abweichenden Innendruck der Reifen untersuchen.

Figur 3 stellt eine erfindungsgemäße Platte 31 dar, die gegenüber der Horizontalen mit Hilfe eines Hubzylinders 34, der in Richtung des Doppelpfeils bewegbar ist die Platte 31 über ein Gelenk 32 von der Grundplatte 33 abhebt. Die Antriebsräder 2 und die nicht angetriebenen Räder 2' sind in Kupplungen 8 bzw. 8' festgehalten. Über die Prüfstandsmaschine 6 werden beispielsweise Kräfte in das Kraftfahrzeug eingeleitet oder wenn die Antriebsmaschine 6 als Bremse wirkt, die vom Kraftfahrzeugmotor ausgehenden Kräfte und Momente in die dann als Bremse funktionierende Antriebsmaschine beispielsweise eine Gleichstrommaschine oder Wasserwirbelbremse eingeleitet.

Durch Kippen der Grundplatte 31 aus der Bildebene heraus, was durch ein Anheben des Gelenks 32 auf einer Seite und durch Anheben der Grundplatte im Bereich des Hubzylinders 34 durch einen weiteren Hubzylinder geschieht, können auch in diesem Falle Seitenbelastungen, wie sie im Betrieb auftreten und die den Antriebsstrang beeinflussen simuliert werden.

**Patentansprüche**

1. Verfahren zur Übertragung von Kräften und/oder Momenten zwischen einem antreibbaren Prüfstand und einem mit dem antreibbaren (6, 7) Aufstand drehelastisch (8) verbundenen Prüfling (1), dadurch gekennzeichnet, daß die Masse des Prüflings (1) nur an der drehelastischen Verbindung (8) am antreibbaren Prüfstand aufgehängt wird und daß der Prüfling (1) nur durch die drehelastische Verbindung (8) fixiert wird.

2. Vorrichtung zur Durchführung des Verfahrens nach Anspruch 1 mit einem Prüfstand bestehend aus Antriebs-/Bremsmitteln (6, 7) die drehelastisch (8) mit einem zu untersuchenden Prüfling (1) verbunden sind, dadurch gekennzeichnet, daß jedes Antriebs-/Bremsmittel (6, 7) des Prüfstandes nur über das jeweilige drehelastische Kupplungselement (8) koaxial mit ein aufblasbares Element (2) besitzenden Rad verbunden ist wobei das Element (2) den Trieb eines Kraftfahrzeugs oder eines Triebstranges als Prüfling (1) auf die Antriebs-/Bremsmittel des Prüfstandes überträgt.

3. Vorrichtung nach Anspruch 2, dadurch gekennzeichnet, daß das Element ein aufgepumpter Reifen (2) ist.

4. Vorrichtung nach Anspruch 3, dadurch gekennzeichnet, daß die restlichen Räder (2', 3, 3') des Kraftfahrzeugs (1) oder des Triebsstranges ebenfalls in zu diesem koaxial angeordneten drehelastischen Kupplungselementen (8', 9, 9') gelagert sind.

5. Vorrichtung nach einem oder mehreren der vorhergehenden Ansprüche, dadurch gekennzeichnet, daß ein topfartiges Gebilde als Kupplungselement (8) die Lauffläche eines aufblasbaren Reifens (2, 3) eines Kraftfahrzeugrades oder eines Triebsstranges umschließt.

6. Vorrichtung nach einem oder mehreren der Ansprüche 2 bis 4, dadurch gekennzeichnet, daß ein gitterartiges Gebilde als Kupplungselement (8) benutzt wird.

7. Vorrichtung nach einem oder mehreren der Ansprüche 2 bis 6, dadurch gekennzeichnet, daß der Innendurchmesser des Kupplungselements (8) veränderbar ist.

8. Vorrichtung nach einem oder mehreren der vorhergehenden Ansprüche, dadurch gekennzeichnet, daß die Antriebs-/Bremsmittel (6, 7) auf einer Grundplatte (31) verschiebbar in Richtung der Achse mindestens eines Kraftfahrzeugrades oder mindestens eines Rades des Triebsstranges angeordnet sind.

9. Vorrichtung nach Anspruch 8, dadurch gekennzeichnet, daß die Grundplatte (31) mit den Antriebs-/Bremsmitteln (6, 7) auf einer Seite heb- und senkbar (34) ist.

**Claims**

1. Method for transmission of loads and/or moments between a test stand which can accept drive power and a test sample [1] which can be connected by a torsionally elastic facility [8] with the drivable test stand [6, 7], characterised in that the weight of the test sample is supported only on the torsionally elastic connection [8] on the test stand which can accept drive power, and that the test sample [1] is attached only by the torsionally elastic connection [8].

2. Device for performance of the method according to Claim 1, with a test stand consisting of drive/brake means [6, 7] which are connected with a test sample [1] for investigation via a torsionally elastic connection [8], characterised in that each drive/brake means [6, 7] of the test stand is coaxially connected with a wheel possessing an inflatable element [2] only via the respective torsionally elastic coupling element [8], the element [2] transmitting the drive from a vehicle or from a drive train arranged as a test sample [1] to the drive/brake means of the test stand.

3. Device according to Claim 2, characterised in that the element is an inflated tyre [2].

4. Device according to Claim 3, characterised in that the remaining wheels [2', 3, 3'] of the vehicle [1] or of the drive train are also mounted in torsionally elastic coupling elements [8', 9, 9'] which are arranged coaxially therewith.

5. Device according to one or more of the preceding Claims, characterised in that a dome-shaped configuration in the capacity of a coupling element [8] encloses the tread surface of an inflatable tyre [2, 3] of a vehicle or of a drive train.

6. Device according to one or more of Claims 2 to 4, characterised in that a grid-type configuration is used as the coupling element [8].

7. Device according to one or more of Claims 2 to 6, characterised in that the internal diameter of the coupling element [8] can be varied.

8. Device according to one or more of the preceding Claims, characterised in that the drive/brake means [6, 7] are arranged on a baseplate [31] which can be displaced in the direction of the axle of at least one vehicle wheel or of at least one wheel of the drive train.

9. Device according to Claim 8, characterised in that one side of the baseplate [31] can be raised and lowered [34] together with drive/brake means [6, 7].

**Revendications**

1. Procédé de transmission d'efforts et/ou de couples, entre un banc d'essai susceptible d'être entraîné et une éprouvette (1) reliée de manière élastique en rotation (8) au banc d'essai susceptible d'être entraîné (6, 7), caractérisé en ce que la masse de l'éprouvette (1) est suspendue sur le banc d'essai susceptible d'être entraîné, uniquement à la liaison (8) élastique en torsion, et en ce que l'éprouvette (1) est fixée uniquement au moyen de la liaison (8) élastique en torsion.

2. Dispositif pour exécuter le procédé selon la revendication 1, avec un banc d'essai se composant de moyens d'entraînement/de freinage (6, 7) qui sont reliés de manière élastique en rotation à l'éprouvette à essayer, caractérisé en ce que chaque moyen d'entraînement/de freinage (6, 7) du banc d'essai est uniquement relié coaxialement par chaque élément d'accouplement (8) élastique en rotation, à la roue possédant un élément (2) gonflable, l'élément (2) transmettant à cette occasion le mouvement d'un véhicule automobile ou d'un tronçon d'entraînement servant d'éprouvette (1), au moyen d'entraînement/de freinage du banc d'essai.

3. Dispositif selon la revendication 2, caractérisé en ce que l'élément est un pneumatique (2) gonflé.

4. Dispositif selon la revendication 3, caractérisé en ce que les roues (2', 3, 3') restantes du véhicule automobile (1) ou du tronçon moteur sont également montées dans des éléments d'accouplements (8', 9, 9') élastiques en rotation disposés coaxialement par rapport à celui-ci.

5. Dispositif selon une ou plusieurs des revendications précédentes, caractérisé en ce qu'un objet de forme du type d'un pot entoure à titre d'élément d'accouplement (8) la surface de roulement d'un pneumatique gonflable (2, 3) d'une roue de véhicule automobile ou d'un tronçon moteur.

6. Dispositif selon une ou plusieurs des revendications 2 à 4, caractérisé en ce qu'un objet de forme du type d'une grille est utilisé pour élément d'accouplement (8).

7. Dispositif selon une ou plusieurs des revendications 2 à 6, caractérisé en ce que le diamètre intérieur de l'élément d'accouplement (8) est susceptible d'être modifié.

8. Dispositif selon une ou plusieurs des revendications précédentes, caractérisé en ce que les moyens d'entraînement/de freinage (6, 7) est susceptible d'être déplacé sur une plaque de base (31), en direction de l'axe au moins d'une roue de véhicule, ou au moins d'une roue du tronçon moteur.

9. Dispositif selon la revendication 8, caractérisé en ce que la plaque de base (31) avec les moyens d'entraînement/de freinage (6, 7) est susceptible d'être soulevée et baissée (34) sur un côté.

# Figur 1

EP 0 185 790 B1

Figur 2

# Figur 3